Europäisches Patentamt

European Patent Office

Office européen des brevets

(11) Veröffentlichungsnummer: **0 029 560**
**B1**

(12) **EUROPÄISCHE PATENTSCHRIFT**

(45) Veröffentlichungstag der Patentschrift: **07.05.86**

(21) Anmeldenummer: **80107086.3**

(22) Anmeldetag: **15.11.80**

(51) Int. Cl.⁴: **G 01 S 13/76,** H 04 B 1/59,
G 07 C 11/00

(54) **Verfahren zum Erkennen und Zählen von Objekten.**

(30) Priorität: **21.11.79 DE 2946942**

(43) Veröffentlichungstag der Anmeldung:
**03.06.81 Patentblatt 81/22**

(45) Bekanntmachung des Hinweises auf die
Patenterteilung:
**07.05.86 Patentblatt 86/19**

(84) Benannte Vertragsstaaten:
**CH FR GB IT LI SE**

(56) Entgegenhaltungen:
AT-B- 295 859
DE-B-2 131 353
GB-A-1 473 973
US-A-3 981 011

(73) Patentinhaber: BROWN, BOVERI & CIE
Aktiengesellschaft Mannheim
Kallstadter Strasse 1
D-6800 Mannheim Käfertal (DE)

(72) Erfinder: Berthold, Rainer, Dipl.-Phys
Wielandstrasse 4
D-6901 Gaiberg (DE)

(74) Vertreter: Kempe, Wolfgang, Dr. et al
c/o Brown, Boveri & Cie AG Postfach 351
D-6800 Mannheim 1 (DE)

Courier Press, Leamington Spa, England.

## Beschreibung

Die Erfindung bezieht sich auf ein Verfahren zum Erkennen und Zählen von Objekten gemäß dem Oberbegriff des Patentanspruches 1. Ein solches Verfahren ist aus US—A—3 981 011 bekannt.

Aus der GB—A—1 473 973 ist ein sekundares Radarsystem zur Uberwachung des Flugverkehrs bekannt. Für die Durchführung des Verfahrens werden ein Abfragegerät und mehrere Antwortgeräte verwendet. Mit diesem Verfahren ist es möglich, die Antwortgeräte von dem Abfragegerät aus zu identifizieren. Von dem Abfragegerät werden einfache Pulskombinationen, die zeitlich voneinander getrennt sind und einem bestimmten Code entsprechen, ausgesendet, um damit die Antwortgeräte, die in dem zu überwachenden Bereich angeordnet sind, zur Aussendung einer Antwort anzusteuern. Das Abfragegerät ist so ausgebildet, daß es während eines Zyklus mehrere Signale aussendet, die durch Codes gebildet sind, die einen bestimmten Zahlenwert beinhalten. Ist einer dieser Zahlenwerte in einem Antwortgerät gespeichert, welches von dem Abfragegerät angesprochen wird, so gibt das Antwortgerät ein Signal ab, das vom Abfragegerät gespeichert wird. Am Ende des Zyklus, wenn alle Codes ausgesendet sind, wird mittels des im Abfragegerät angeordneten Analysators das Kennzeichen der angesprochenen Antwortgeräte ermittelt. Dies geschieht dadurch daß die Kennzeichen, bei denen ein Antwortgerät jeweils ein Signal an das Abfragegerät ausgesendet hat, addiert werden. Die Summe dieser Zahlen entspricht der Nummer des Antwortgerätes. Eine Unterscheidung zwischen verschiedenen Antwortgeräten bei der Abfrage erfolgt mit Hilfe zusätzlicher Primärradarsignale.

Von Nachteil ist hierbei, daß die Energieversorgung der Antwortgeräte nicht optimal gelöst und die stellenweise Abfrage der im Antwortgerät gespeicherten Kennzeichen nicht möglich ist. Da das endgültige Kennzeichen des Antwortgerätes erst durch Addition der bestätigten Codes ermittelt wird, sind hierdurch zusätzliche Fehlerquellen gegeben, die das System sehr unzuverlässig machen. Ferner können nur Kennzeichen ermittelt werden, die aus Zahlen bestehen, da eine Addition von Kennzeichen, die aus Buchstaben bestehen, nicht möglich ist.

Aus der bereits erwähnten US—A—3 981 011 ist eine Einrichtung mit einem Abfragegerät bekannt, das mit mehreren Antwortgeräten Kontakt aufnehmen kann. Von dem Abfragegerät werden Codes an die Antwortgeräte ausgesendet. Innerhalb der Antwortgeräte weden diese empfangenen Codes mit dort gespeicherten Codes verglichen. Bei Gleichheit wird ein Signal an das Abfragegerät zurückgesendet, aus dem die Identität des Antwortgerätes hervorgeht.

Aus der DE—A—2 736 217 und der DE—A—2 508 201 sind Einrichtungen bekannt, die von einem beispielsweise ortsfesten Abfragegerät einen Energiestrahl auf das an dem zu identifizierenden Objekt befestigten Antwortgerät strahlen. Diese Energie wird von einer Energieaufnahmeeinrichtung, z.B. einer Antenne oder einem Solargenerator, aufgenommen und in elektrische Energie umgewandelt, die zur Versorgung der Schaltungseinheit im Antwortgerät dient. Sobald die eingestrahlte Energie ausreicht, um einen sicheren Betrieb des Antwortgerätes zu ermöglichen, strahlt das Antwortgerät über einen Sender die in ihm gespeicherten Informationen aus. Zu diesem Zweck befindet sich im Antwortgerät ein Festwertspeicher und ggf. ein extern veränderbarerer Zusatzspeicher. Im Festwertspeicher sind die unveränderlichen Daten des zu identifizierenden Objektes enthalten; im änderbaren Speicher werden bei Bedarf zusätzliche Daten eingespeichert. Diese bekannten Einrichtungen können an beliebigen Objekten befestigt werden. Sie können zu beliebigen Zeiten und an beliebig wählbaren Orten automatisch, zerstörungsfrei und berührungslos abgefragt werden. Dabei strahlen sie jedesmal das gespeicherte Kennzeichen vollständig ab.

Aus der DE—A—2 747 388 ist ein elektronisches Kontrollsystem bekannt, bei dem zwei zur Erzeugung je eines drahtlos zu übertragenden Signals befähigte, aus je einem Sender und je einem Empfänger kombinierte Anlagen vorgesehen und derart ausgestaltet sind, daß ein jeweils von der einen Anlage emittiertes Signal von der anderen Anlage erkannt wird, wobei beim Erkennen des an sie gerichteten Signals die zweite Anlage mit der Entsendung eines an die erste Anlage gerichteten Signals reagiert. Dabei besitzt die erste Anlage einen ihren Sender steuernden Programmgeber, während die zweite Anlage mit einem auf das von dem Sender emittierte Signal ansprechenden Diskriminator oder Analysator versehen ist, der den Einsatz entweder des Senders der Anlage und/oder eines durch die betreffende Anlage zu steuernden Gerätes, z.B. einer Alarmanlage, bestimmt. Mit Hilfe des Programmgebers kann die erste Anlage verschiedene codierte Signale aussenden. Die zweite Anlage gibt nur dann ein Antwortsignal ab, wenn das richtige Code-Signal empfangen wurde.

Ist die erste Anlage mit einer durch einen sogenannten elektronischen Schlüssel zu öffnenden Tür gekoppelt, beispielsweise derart, daß das durch die erste Anlage gesteuerte Arbeitsgerät die Verriegelung dieser Tür öffnet, so soll die zweite Anlage derart miniaturisiert sein, daß sie als Identifizierungskarte an verschiedene, autorisierte Personen verteilt werden kann, die zum Öffnen dieser Tür befugt sind. Zum Öffnen anderer Türen befugte Personen erhalten Identifizierungskarten, in denen ein anderes Code-Zeichen gespeichert ist.

Nachteilig bei den letztgenannten Anlagen ist, daß dann, wenn sich eine Vielzahl gleichartiger Antwortgeräte im Bereich eines zentralen Abfragegerätes befindet, alle diese Antwortgeräte gleichzeitig antworten, so daß weder die Zahl der angesprochenen Antwortgeräte bestimmt noch die abgestrahlten Kennzeichen identifiziert werden können.

Der vorliegenden Erfindung liegt die Aufgabe zugrunde, ein Verfahren anzugeben, mit dessen Hilfe die Zahl der aktivierten Antwortgeräte exakt bestimmbar ist und die Antwortgeräte selbst anhand ihrer Kennzeichen sicher identifizierbar sind.

Diese Aufgabe wird erfindungsgemäß durch die Merkmale des Patentanspruches 1 gelöst.

Ein wesentlicher Vorteil dieses Verfahrens besteht darin, daß das Auftreten von mehreren Identitätssignalen während der Abfrage nicht stört. Erfindungsgemäß können mit einem Minimum von Schritten die Kennzeichen aller Objekte, die mit einem derartigen Antwortgerät versehen sind, schrittweise abgefragt werden. Als besonderer Vorteil ist bei diesem Verfahren hervorzugeben, daß nicht die Kennzeichen selbst, sondern nur die Identitätssignale vom Antwortgerät zum Abfragegerät übertragen werden, was der Energiebilanz der Antwortgeräte zugute kommt, und wodurch ein fehlerfreies Ermitteln der Kennzeichen möglich ist. Gleichzeitig kann noch die Anzahl der in jedem Antwortgerät gespeicherten Kennzeichen mitbestimmt werden. Hierfür werden die vom Signalempfänger des Abfragegerätes empfangenen Identitätssignale einem Identitätszähler zugeführt, sobald die letzte Stelle der Kennzeichen abgefragt wird. Ein zusätzliches Ermitteln der Anzahl diese Kennzeichen aus der Anzahl der gespeicherten Suchzeichen entfällt hierbei.

Die Erfindung wird nachfolgend anhand einer Zeichnung näher erläutert.

Das Blockschaltbild zeigt ein für die Durchführung des Verfahrens verwendetes Abfragegerät und ein zugehöriges Antwortgerät. Das Abfragegerät enthält einen Energiesender 11, der beispielsweise über eine drahtlose Funkstrecke 3.1 Energie an einen Energie-Empfänger 21 im Antwortgerät 2 liefert. Diese Energie dient zur Spannungsversorgung des Antwortgerätes 2.

Man erkennt weiterhin im Abfragegerät 1 eine Signalempfangseinrichtung 12, die über einen beispielsweise drahtlosen Funkweg 3.3 Signale von einer Signalabgabeeinrichtung 27 im Antwortgerät 2 erhält. Die Ausgangssignale der Signalempfangseinrichtung 12 gelangen auf ein Identitäts-Gatter 13 und auf einen Identitätszähler 17. Man erkennt weiterhin einen Identitätsspeicher 14, einen Adressen- und Datengenerator 15 sowie einen Signalsender 16, der die Signale des Abfragegerätes 1 über einen Funkweg 3.2 an eine Signalaufnahmeeinrichtung 22 im Antwortgerät 2 sendet. Identitätsgatter 13, Identitätsspeicher 14, Adressen- und Datengenerator 15 sowie Identitätszähler 17 bilden die Signalverarbeitungseinrichtung des Abfragegerätes 1. Energiesender 11 und Signalsender 16 können auch vereinigt sein.

Im Antwortgerät 2 erkennt man einen Adressen- und Datenverarbeiter 23, der der Signalaufnahmeeinrichtung 22 nachgeordnet ist. Die Adressen werden auf ein Kennzeichen-Gatter 25 gegeben, die Daten auf ein erstes Schieberegister 24.1. Das Kennzeichen-Gatter 25 schaltet soviele Stellen des im Kennzeichen-Speicher 26 fest eingespeicherten Kennzeichens zu einem zweiten Schieberegister 24.2 durch, wie durch die empfangene Adresse festgelegt ist.

Den beiden Schieberegistern 24.1, 24.2 ist ein Vergleicher 29 nachgeordnet, der bei Identität der in den beiden Schieberegistern vorliegenden Kennzeichen die Signalabgabeeinrichtung 27 zur Abgabe eines Identitätssignals über den Signalweg 3.3 veranlaßt. Zur Steuerung des logischen Ablaufs innerhalb des Antwortgeräts ist ein zentraler Taktgenerator 28 vorgesehen.

Um das erfindungsgemäße Verfahren und den Ablauf der Vorgänge in Abfrage- und Antwortgerät verstehen zu können, sei angenommen, daß in einem Versandhaus alle Waren mit einem elektronischen Etikett versehen sind und daß die für den Versand an die Kunden vorbereiteten Pakete vor dem Ausgang vollautomatisch anhand des Bestellscheins kontrolliert werden sollen. In einem solchen Fall könnte man daran denken, die auf dem Kunden-Bestellschein vermerkten Kennzeichen der Waren elektronisch abzufragen; man erhält dann eine Aussage darüber, ob die vom Kunden bestellten Waren auch im Paket sind. Man erhält jedoch keine Auskunft darüber, ob nicht noch zusätzliche Waren in dem Paket sind, da die Antwortgeräte dieser Waren sich nicht melden, da ihr Kennzeichen nicht abgefragt wird. Eine vollständige Übersicht über den Inhalt eines derartigen Paketes kann nur dadurch erhalten werden, daß die Antwortgeräte aller in dem Paket enthaltenen Waren zur Abgabe ihres Kennzeichens veranlaßt werden. Damit nun nicht alle Antwortgeräte gleichzeitig ihre Kennzeichen abgeben, was dazu führen würde, daß die Kennzeichen nicht mehr unterscheidbar sind, werden die Antwortgeräte nacheinander aktiviert.

Als Beispiel sei angenommen, daß in dem Paket sechs Objekte mit den folgenden Kennzeichen enthalten sind:

A 0000 A
A 4321 B
B 7933 E
B 7941 F
G 4321 H
Z 9999 Z

Der Adressen- und Datengenerator 15 erzeugt zunächst eine Adresse, die das Kennzeichen-Gatter 25 so steuert, daß nur die erste Stelle des Kennzeichens aus dem Kennzeichen-Speicher 26 in das Schieberegister 24.1 eingespeist wird. Weiterhin bildet der Adressen- und Datengenerator 15 ein Suchzeichen, das zunächst nur aus einer Stelle besteht, und variiert die in der ersten Stelle des Kennzeichens möglichen Kombinationen, d.h. die Buchstaben A bis Z systematisch. Der Vergleicher 29 stellt fest, daß bei den Buchstaben A, B, G und Z Identität vorliegt. Das Identitätssignal steuert das Identitätsgatter 13 so, daß jedes Suchziehen, bei dem Identität festgestellt wurde, in den Identitätsvergleicher 14 gespeichert wird. Am Ende des ersten Abfragezyklus stehen dann im Identitätsspeicher die Buchstaben A, B, G, Z.

Bei Beginn des zweiten Abfragezyklus wird im Adressen- und Datengenerator 15 zunächst eine Adresse erzeugt, die das Kennzeichen-Gatter 25 veranlaßt, die erste und zweite Stelle des Kennzeichens aus dem Kennzeichen-Speicher 26 in das Schieberegister 24.2 zu übertragen. Gleichzeitig holt sich des Adressen- und Datenspeicher 15 aus dem Identitätsspeicher 14 den Inhalt des ersten Speicherplatzes, d.h. den Buchstaben A als erste Stelle des neuen Suchzeichens und variiert nun die zweite Stelle systematisch durch. Identitätssignale treten jetzt bei den Suchzeichen A 0 und A 4 auf, die über das Identitätsgatter 13 wieder in den Identitätsspeicher 14 gespeichert werden. Anschließend werden noch die Buchstaben B, G und Z verarbeitet, wobei Identitätssignale bei den Suchzeichen B 7, G 4 und Z 9 auftreten. Auch diese werden in den Identitätsspeicher 14 gespeichert.

Dieser Suchvorgang wird nun kontinuierlich fortgesetzt, so daß am Ende des sechsten Abfragezyklus die vollständigen Kennzeichen aller sechs Objekte im Identitätsspeicher abgespeichert sind. Durch Abzählen der Zahl der belegten Speicherplätze im Identitätsspeicher 14 erhält man die Zahl der im Paket enthaltenen Objekte. Um diesen nachfolgenden Rechenvorgang zu vermeiden, ist der Identitätszähler 17 vorgesehen, der über den Adressen- und Datengenerator 15 so beeinflußt wird, daß er die von der Signalempfangseinrichtung 12 kommenden Identitätssignale nur während des letzten Abfragezyklus zählt, d.h. wenn die im Adressen- und Datengenerator 15 erzeugte Adresse den entsprechenden Wert besitzt.

Während die Zahl der Abfragezyklen abhängig ist von der Stellenzahl der Kennzeichen, ist die Zahl der Suchschritte abhängig von der Zahl der möglichen Variation der Zeichen einer Kennzeichenstelle sowie abhängig von der Zahl der zu ermittelnden Objekte. Enthalten die zu ermittelnden Kennzeichen Buchstaben, so sind dort beispielsweise 25 Variationsmöglichkeiten gegeben; enthält eine Kennzeichenstelle Ziffern, so sind 10 Variationsmöglichkeiten gegeben. Außerdem geht die Zahl der zu ermittelnden Objekte ein. Bei den oben als Beispiel gewählten Kennzeichen mit zwei Buchstabenstellen und vier Ziffernstellen ergeben sich 90 Variationsmöglichkeiten. Die sechs als Beispiel gewählten Kennzeichen sind im ungünstigsten Fall nach spätestens 537 Suchschritten einwandfrei bestimmt. Die minimale Zahl von Suchschritten beträgt 90. Da sich bei einer Vielzahl von Suchvorgängen günstige und ungünstige Kennzeichkombinationen die Waage halten dürften, wäre ein durchschnittlicher Suchvorgang nach 313,5 Suchschritten abgeschlossen. Bei einer Dauer von $10^{-4}$ sec. pro Suchschritt würde ein durchschnittlicher Suchvorgang demnach nach 31,35 Millisekunden abgeschlossen sein.

Eine weitere Anwendungsmöglichkeit des erfindungsgemäßen Verfahrens besteht in der Möglichkeit, die Richtigkeit einer angegebenen Stückzahl derartiger Objekte zu kontrollieren. Wenn beispielsweise angegeben ist, daß ein Bündel von Objekten aus 100 Stück besteht, und die nach dem erfindungsgemäßen Verfahren durchgeführte vollautomatische Kontrolle nur 99 Stück ergibt, so läßt diese auf folgende Ursachen schließen:

1. Das Bündel enthält — absichtlich oder unabsichtlich — eine falsche Zahl von Objekten.

2. Eines der Objekte ist verschieden von den 99 übrigen Objekten, so daß sein Antwortgerät nicht auf den Abfrageimpuls ansprechen kann.

3. Zwei Objekte besitzen ein identisches Kennzeichen, beispielsweise weil eines der Objekte eine Fälschung ist.

4. Eines der Objekte besitzt kein Antwortgerät, beispielsweise weil es eine Fälschung ist.

5. Eines der Antwortgeräte ist defekt.

Auch in einem solchen Anwendungsfall liegt das Ergebnis innerhalb sehr kurzer Zeit vor.

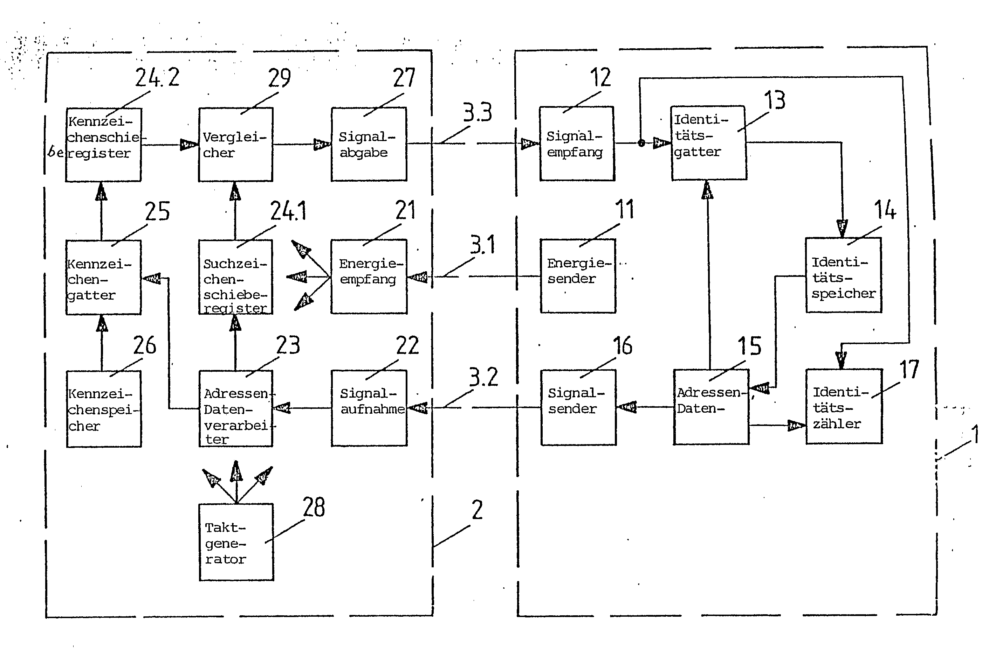

## Patentansprüche

1. Verfahren zum Erkennen und Zählen von Objekten, die jeweils mit einem Antwortgerät (2) ausgerüstet sind, das eine Energie- und Signalaufnahmeeinrichtung (21, 22), eine ein mehrstelliges, dem jeweiligen Objekt zugeordnetes Kennzeichen enthaltene Speichereinrichtung (26), eine Vergleichseinrichtung (29) sowie eine Signalabgabeeinrichtung (27) aufweist, bei welchem

— von einem zentralen Abfragegerät (1), welches eine Energie- und Signalsendeeinrichtung (11, 16), eine Signalempfangseinrichtung (12) und eine einen Signalgenerator (15) sowie einen Signalspeicher (14) enthaltende Signalverarbeitungseinrichtung (13—15, 17) aufweist, eine Folge von systematisch variierenden Abfragesignalen erzeugt,

— in jedem Antwortgerät (2) mittels der Vergleichseinrichtung (29) ein Vergleich eines jeden Abfragesignals der Folge mit dem gespeicherten Kennzeichen durchgeführt,

— im Falle der Übereinstimmung eines Abfragesignals und eines gespeicherten Kennzeichens vom betreffenden Antwortgerät (2) ein Identitätssignal an das Abfragegerät (1) gesendet, und

— bei Empfang eines Identitätssignals durch das Abfragegerät das zugeordnete Abfragesignal im Signalspeicher (14) gespeichert wird, dadurch gekennzeichnet, daß

— in einer der Stellenzahl des Kennzeichens entsprechenden Zahl von aufeinanderfolgenden Abfragezyklen während jedes Zyklus jeweils eine Anzahl von Abfragesignalen erzeugt wird, die sich jeweils aus einem Adressenteil und einem Datenteil zusammensetzen, wobei der Adressenteil die in den Antwortgeräten zum Vergleich heranzuziehenden Stellen des Kennzeichens bestimmt und der Datenteil eine der Zahl der adressierten Stellen entsprechende Zahl von Suchzeichen umfaßt,

— jeweils von einem Zyklus zum nächsten die Adressenteile der Abfragesignale so geändert werden, daß sich die Zahl der zum Vergleich herangezogenen Stellen des Kennzeichens ausgehend von der ersten Stelle mit jedem Zyklus um eine Einheit erhöht,

— innerhalb eines jeden Zyklus von einem Abfragesignal zum nächsten das an letzter Stelle des Datenteils der Abfragesignale des jeweiligen Zyklus stehende Suchzeichen jeweils geändert wird, wobei das betreffende Suchzeichen alle für dieses Suchzeichen zulässigen Werte durchläuft,

— in den Antwortgeräten jeweils die vom Adressenteil eines jeden Abfragesignals aufgerufenen Stellen des Kennzeichens mit den stellenmäßig zugeordneten Suchzeichen des Datenteils des betreffenden Abfragesignals verglichen werden,

— mit den jeweils bei Identität der verglichenen Suchzeichen- und Kennzeichenstellen von den Antwortgeräten abgebenden Identitätssignalen die Speicherung der das Identitätssignal auslösenden Suchzeichenkombination im Abfragegerät veranlaßt wird,

— mit den jeweils während eines Abfragezyklus gespeicherten Suchzeichenkombinationen im folgenden Abfragezyklus die entsprechenden, der letzten Stelle des Datenteils der Abfragesignale dieses folgenden Zyklus vorausgehenden Stellen des Datenteils besetzt werden,

— die während des letzten Zyklus empfangenen Identitätssignale im Abfragegerät gezählt werden.

2. Verfahren nach Anspruch 1, dadurch gekennzeichnet, daß die Energie und die Abfragesignale gemeinsam als modulierter Energiestrahl übertragen werden.

**Revendications**

1. Procédé pour la reconnaissance et le comptage d'objets équipés respectivement d'un instrument de réponse (2) qui présente un dispositif (21, 22) de réception d'énergie et de signaux, un dispositif de mémorisation (26) contenant une caractéristique à plusieurs chiffres associée à l'objet respectif, un dispositif de comparaison (29) ainsi qu'un dispositif d'émission de signaux (27), dans lequel

— une séquence de signaux d'interrogation variant systématiquement est produite par un instrument d'interrogation (1) central qui présente un dispositif (11, 16) d'émission d'énergie et de signaux, un dispositif (12) de réception de signaux et un générateur de signaux (15) ainsi qu'un dispositif (13—15, 17) de traitement des signaux contenant une mémoire de signaux (14),

— dans chaque instrument de réponse (2) est exécutée au moyen du dispositif de comparaison (29) une comparaison entre chaque signal d'interrogation de la séquence et la caractéristique mise en mémoire,

— dans le cas de concordance entre un signal d'interrogation et une caractéristique mise en mémoire, l'instrument de réponse (2) émet un signal d'identification à l'instrument d'interrogation (1),

— en case de réception d'un signal d'identification par l'instrument d'interrogation, le signal d'interrogation correspondant est mis en mémoire dans la mémoire de signaux (14),

caractérisé par le fait que pendant un nombre de cycles d'interrogation successifs qui correspond au nombre de chiffres de la caractéristique, est généré pendant chaque cycle respectivement un nombre de signaux d'interrogation qui se composent respectivement d'une partie "adresse" et d'une partie "données", la partie adresse définissant les chiffres de la caractéristique utilisables pour la comparaison dans les instruments de réponse et la partie données englobant un nombre de signaux de recherche correspondant au nombre des chiffres de l'adresse,

— respectivement d'un cycle au cycle suivant, les parties adresse des signaux d'interrogation sont modifiées de telle sorte que le nombre des chiffres de la caractéristique utilisés pour la comparaison augmente d'une unité à chaque cycle, à partir du premier chiffre,

— à l'intérieur de chaque cycle, d'un signal d'interrogation au suivant, le signal de recherche placé au dernier chiffre de la partie données des signaux d'interrogation du cycle respectif est modifié, le signal de recherche concerné parcourant toutes les valeurs admissibles pour ledit signal de recherche,

— dans les instruments de réponse les chiffres de la caractéristique appelés respectivement par la partie adresse de chaque signal d'interrogation sont comparés avec les signaux de recherche de position, associés du point de vue chiffres, de la partie données du signal d'interrogation concerné,

— au moyen des signaux d'identité émis respectivement par les instruments de réponse en cas d'identité entre les chiffres de signaux de recherche et les chiffres de caractéristique comparés, la combinaison des signaux de recherche déclenchant le signal d'identification est mise en mémoire dans l'instrument d'interrogation,

— pendant le cycle d'interrogation suivant, les combinaisons de signaux de recherche respectivement mises en mémoire pendant un cycle d'interrogation occupent les places des chiffres correspondants de la partie données qui précèdent le dernier chiffre de la partie données des signaux d'interrogation de ce cycle suivant,

— les signaux d'identification reçus pendant le dernier cycle sont comptés dans l'instrument d'interrogation.

2. Procédé selon la revendication 1, caractérisé par le fait que l'énergie et les signaux d'interrogation sont transmis ensemble sous la forme d'un rayonnement énergétique modulé.

## Claims

1. Method for detecting and counting objects which are in each case equipped with a response device (2) which is provided with a power and signal receiving device (21, 22) a storage device (26) which contains a multi-position identification allocated to the respective object, a comparing device (29) and a signal emitting device (27), in which method

— a sequence of systematically varying interrogation signals is generated by a central interrogation device (1) which is provided with a power and signal transmitting device (11, 16), a signal receiving device (12), and a signal processing device (13—15, 17) containing a signal generator (15) and a signal memory (14),

— each interrogation signal of the sequence is compared with the stored identification by means of the comparing device (29) in each response device (2),

— an identity signal is sent by the response device (2) concerned to the interrogation device (1) in the case of an agreement between an interrogation signal and a stored identification, and

— if an identity signal is received by the interrogation device, the associated interrogation signal is stored in the signal memory (4), characterised in that

— in a number, corresponding to the number of positions of the identification, of successive interrogation cycles, in each case a number of interrogation signals is generated during each cycle, which interrogation signals are in each case composed of an address section and a data section, and in which arrangement the address section determines the identification positions to be used for the comparison in the response devices and the data section comprises a number of search characters corresponding to the number of positions addressed,

— the address sections of the interrogation signals are in each case modified from one cycle to the next in such a manner that the number of the identification positions used for the comparison increases by one unit with each cycle, starting from the first position,

within each cycle, the search character located in the end position of the data section of the interrogation signals of the respective cycle is modified in each case from one interrogation signal to the next, the search character concerned passing through all values permissible for this search character,

— the identification positions called up in each case by the address section of each interrogation signal are compared in the response devices with the search characters, allocated by position, of the data section of the interrogation signal concerned,

— the identity signals emitted in each case by the response devices in the case of identity between the search character and identification positions compared are used for storing in the interrogation device the combination of search characters triggering the identity signal,

— the combinations of search characters stored in each case during an interrogation cycle are used in the subsequent interrogation cycle for occupying the corresponding data section positions preceding the last position of the data section of the interrogation signals of this subsequent cycle,

— the identity signals received during the last cycle are counted in the interrogation device.

2. Method according to Claim 1, characterised in that the power and the interrogation signals are jointly transmitted as a modulated power beam.

0 029 560